# EUROPÄISCHE PATENTSCHRIFT

(11) **EP 1 621 451 B1**
(45) Veröffentlichungstag und Bekanntmachung des Hinweises auf die Patenterteilung: **28.11.2007**
(21) Anmeldenummer: 05011808.2
(22) Anmeldetag: 01.06.2005
(51) Int. Cl.: B62D 25/07

(54) **Aufbau für einen Personenkraftwagen**
Roof structure for a vehicle
Structure de toit pour un véhicule

(30) Priorität: 30.07.2004 DE 102004037109
(43) Veröffentlichungstag der Anmeldung: 01.02.2006
(73) Patentinhaber: Dr. Ing. h.c. F. Porsche Aktiengesellschaft, 70435 Stuttgart (DE)
(72) Erfinder: Koehr, Robert, 67435 Neustadt (DE); Froehlich, Juergen, 73457 Essingen (DE)

(56) Entgegenhaltungen:
- DE-C- 819 641
- DE-U1- 29 607 551
- GB-A- 975 217

## Beschreibung

Die Erfindung betrifft einen Aufbau für einen Personenkraftwagen nach dem Oberbegriff des Patentanspruchs 1.

Ein bekannter Personenkraftwagen, US 4,049,309, weist einen Aufbau mit geringem Luftwiderstand und eine benachbart einer Hinterachse angeordnete Brennkraftmaschine auf. Um die Brennkraftmaschine mit Verbrennungsluft zu versorgen ist an einer Bodenwand des Aufbaus eine Leitvorrichtung vorgesehen, die mit einer Einlassvorrichtung versehen ist. Darüber hinaus ist ein Dach des Aufbaus beiderseits einer Mittellängsebene mit einer Einformung ausgestattet.

In der DE 195 12 048 A1 wird ein Aufbau mit einem relativ horizontal verlaufenden Dach behandelt, das einen Dachkanal mit einer Einlassöffnung und einer Auslassöffnung umfasst. Dieser Dachkanal dient für eine Klimatisierungseinrichtung, die nach dem Kaltdampf- Kompressionskälteprinzip arbeitet.

Aus der DE 819 641 ist eine Sauganlage für insbesondere unter Flur angeordneten Brennkraftmaschinen zum Antrieb von Straßen- und Schienenfahrzeugen bekannt. Um zu vermeiden, dass der durch die Vorderräder aufgewirbelte Staub mit angesaugt wird, wird vorgeschlagen, dass ein Zuführrohr unter Zwischenschaltung eines Luftfilters mit seinem Einlassstück an aerodynamisch günstiger Stelle angeordnet wird, an dem kein bzw. wenig Staub zu erwarten ist.

Einen gattungsgemäßen Aufbau für einen Personenkraftwagen mit einer Leitvorrichtung zur Zuführung von Verbrennungsluft an eine Brennkraftmaschine zeigt die DE 296 07 551 U1. Eine Brennkraftmaschine wird über einen Dachkanal auf zweckmäßige Weise mit Luft für den Kühler und das Ansaugsystem versorgt. Der Kanal lässt sich bei der Konzeption eines Personenwagens auf einfache Weise in den Aufbau integrieren. Dabei und des gesamten Personenwagens beitragen. Der Dachkanal ist sozusagen in das Dach integriert.

Es ist Aufgabe der Erfindung an einem Aufbau eines Personenkraftwagens eine aerodynamisch optimierte Leitvorrichtung vorzusehen, über die eine Brennkraftmaschine gezielt mit Verbrennungsluft versorgt wird und die stabil ausgeführt ist.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die Leitvorrichtung ein Dachkanal ist, über den eine funktionsgerechte Versorgung der Brennkraftmaschine des Personenkraftwagens mit Verbrennungsluft sichergestellt ist. Die Einformung des Dachkanals in das Dach trägt zur Optimierung des Luftwiderstandsbeiwerts bei. Letzteres wird noch durch die zwei Rohrkörper des Dachkanals unterstützt, die aerodynamisch geformt sind und bei entsprechender Formkonzeption auch eine besondere ästhetische Wirkung hervorrufen. Darüber hinaus eignet sich der Dachkanal auch noch für die Unterbringung eines Lufteinlasstrichters. Schließlich lässt sich mit dem Haubenelement, das die Rohrkörper des Dachkanals überwölbt, noch eine weitere Funktionsoptimierung realisieren.

In der Zeichnung werden Ausführungsbeispiele gezeigt, die nachstehend näher erläutert sind.

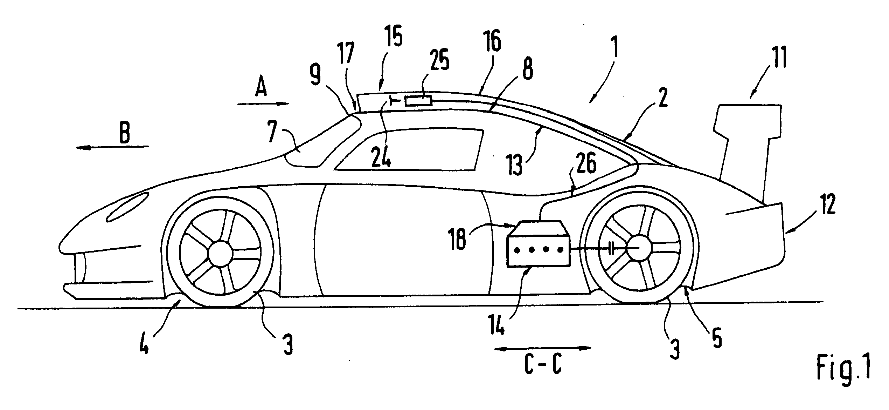

Es zeigen
- Fig. 1: eine Seitenansicht eines Personenkraftwagens mit einer Leitvorrichtung zur Zuführung von Verbrennungsluft an eine Brennkraftmaschine,
- Fig. 2: eine Schrägansicht auf ein Dach des Personenkraftwagens mit einer Leitvorrichtung,
- Fig. 3: eine schematische Ansicht in Pfeilrichtung A der Fig. 1,
- Fig. 4: einen Schnitt nach der Linie IV-IV der Fig. 3.

Ein Personenkraftwagen 1 umfasst einen Aufbau 2, der von Rädern 3 einer Vorderachse 4 und einer Hinterachse 5 getragen wird. Der Aufbau 2 weist einen Bug 6 eine Windschutzscheibe 7 und ein Dach 8 auf, das sich von einem oberen Rahmen 9 der Windschutzscheibe 7 bis zu einem eine aerodynamische Abtriebseinrichtung 11 aufweisenden Heck 12 erstreckt und dabei von der Seite gesehen einen entgegen der Fahrtrichtung B fließend abfallenden Dachlinie 13 aufweist, also aerodynamisch geformt ist.

Zum Antrieb des Personenkraftwagens 1 dient eine Brennkraftmaschine 14, die zwischen Vorderachse 4 und Hinterachse 5 angeordnet ist; allerdings benachbart der Hinterachse 5. Um der Brennkraftmaschine 14 Verbrennungsluft zuzuführen ist am Aufbau 2 eine Leitvorrichtung 15 vorgesehen, die zumindest abschnittsweise in das Dach 8 eingearbeitet ist und durch einen Dachkanal 16 gebildet wird. Der Dachkanal 16 folgt in Fahrzeuglängsrichtung C-C gesehen der Dachlinie 13, weist benachbart der Windschutzscheibe 10 eine Einlassvorrichtung 17 auf und ist an eine Sauganlage 18 der Brennkraftmaschine 14 angeschlossen.

Der Dachkanal 16 ist zumindest bereichsweise in eine Vertiefung 19 des Dachs 8 eingeformt und durch zwei - in Fahrzeugquerrichtung D-D gesehen - nebeneinander verlaufende Rohrkörper 20 und 21 dargestellt, die mit die Einlassvorrichtung 17 bildenden Eintrittsöffnungen 22 und 23 versehen sind. Die Rohrkörper 20 und 21 sind im Zusammenhang mit den Eintrittsöffnungen 21 und 22 aerodynamisch gestaltet, will heißen die Rohrkörper 20 und 21 und die Eintrittsöffnungen 22 und 23 führen bei geringem Luftwiderstandsbeiwert gezielt Verbrennungsluft an einen Lufteinlasstrichter 24 der Sauganlage 18 innerhalb des Dachkanals 16. Der bspw. als Luftmengenbegrenzer dargestellte Lufteinlasstrichter 24 bildet eine Baueinheit mit einem Luftführungsgehäuse 25, das über ein Leitungssystem 26 mit der Sauganlage 18 der Brennkraftmaschine 14 verbunden ist.

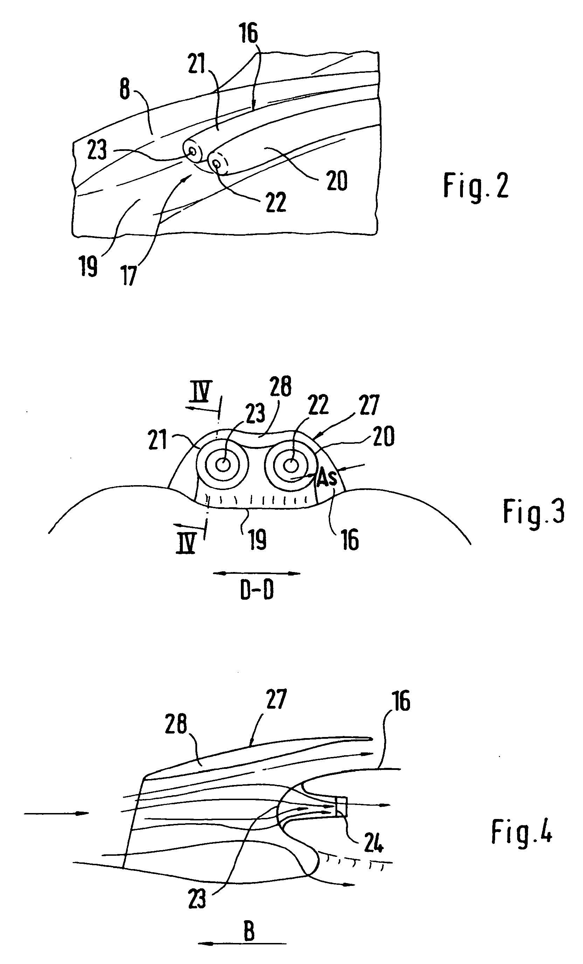

In den Fig. 3 und 4 wird gezeigt, dass benachbart der Eintrittsöffnungen 22 und 23 die Rohrkörper 20 und 21 mit einem Haubenelement 27 umgeben ist. Dabei überwölbt das Haubenelement 27 die Rohrkörper 20 und 21, und eine Haubenwand 28 des Haubenelements 27 verläuft bereichsweise mit Abstand As zu den Rohrkörpern 20 und 21. Im Längsschnitt gesehen - Fig. 4 - überragt in Fahrtrichtung B die Haubenwand 28 die Rohrkörper 20 und 21, welche Haubenwand 28 im Längsschnitt gesehen nach Art eines aerodynamischen Flügels ausgeführt.

## Patentansprüche

1. Aufbau für einen Personenkraftwagen, bei dem wenigstens eine Leitvorrichtung zur Zuführung von Verbrennungsluft an eine Brennkraftmaschine vorgesehen ist, welche Brennkraftmaschine vorzugsweise benachbart einer Hinterachse des Personenkraftwagens angeordnet ist, wobei an einem aerodynamisch geformten Dach (8) des Aufbaus (2) ein als Leitvorrichtung (15) ausgebildeter Dachkanal (16) vorgesehen ist, der einer in Fahrzeuglängsrichtung (C-C) verlaufenden Dachlinie (13) zumindest bereichsweise folgt und benachbart einer Windschutzscheibe (7) eine Einlassvorrichtung (17) aufweist und an eine Sauganlage (18) der Brennkraftmaschine (14) angeschlossen ist, wobei der Dachkanal (16) abschnittsweise in eine Vertiefung (19) des Dachs (8) eingeformt ist, **dadurch gekennzeichnet, dass** der Dachkanal (16) wenigstens zwei Rohrkörper (20 und 21) umfasst, die mit die Einlassvorrichtung (17) bildenden Eintrittsöffnungen (22 und 23) versehen sind.

2. Aufbau nach Anspruch 1, **dadurch gekennzeichnet**, die Rohrkörper (20 und 21) im Zusammenhang mit den Eintrittsöffnungen (22 und 23) aerodynamisch gestaltet sind.

3. Aufbau nach einem oder mehreren der vorangehenden Ansprüche, **dadurch gekennzeichnet, dass** innerhalb des Dachkanals (16) ein Lufteinlasstrichter (24) der Brennkraftmaschine (14) vorgesehen ist.

4. Aufbau nach Anspruch 3, **dadurch gekennzeichnet, dass** der Lufteinlasstrichter (24) eine Baueinheit mit einem Luftführungsgehäuse (25) bildet.

5. Aufbau nach einem oder mehreren der vorangehenden Ansprüche, **dadurch gekennzeichnet, dass** die Eintrittsöffnungen (22 und 23) der Rohrkörper (20 und 21) von einem Haubenelement (27) umgeben sind.

6. Aufbau nach Anspruch 5, **dadurch gekennzeichnet, dass** das Haubenelement (27) die Rohrkörper (20 und 21) überwölbt und mit einer Haubenwand (28) mit Abstand (As) zu den Rohrkörpern (20 und 21) verläuft.

7. Aufbau nach Anspruch 6, **dadurch gekennzeichnet, dass** die Haubenwand (28) die Rohrkörper (20 und 21) in Fahrtrichtung (B) gesehen überragt.

8. Aufbau nach den Ansprüchen 6 und 7, **dadurch gekennzeichnet, dass** die Haubenwand (28) im Längsschnitt gesehen nach Art eines aerodynamischen Flügels ausgebildet ist.

## Claims

1. Body for a car in which at least one guide device is provided for supplying combustion air to an internal combustion engine, which internal combustion engine is preferably arranged adjacent to a rear axis of the car, a roof channel (16) formed as a guide device (15) being provided on an aerodynamically shaped roof (8) of the body (2), which roof channel (16) following at least in sections a roof line (13) running in the longitudinal direction of the vehicle (C-C) and having adjacent to a windscreen (7) an inlet device (17) and being connected to a suction system (18) of the internal combustion engine (14), the roof channel (16) being formed in portions in a recess (19) of the roof (8), **characterized in that** the roof channel (16) comprises at least two tube bodies (20 and 21) which are provided with inlet openings (22 and 23) forming the inlet device (17).

2. Body according to Claim 1, **characterized in that** the tube bodies (20 and 21) are designed aerodynamically in connection with the inlet openings (22 and 23).

3. Body according to one or more of the preceding claims, **characterized in that** an air inlet funnel (24) of the internal combustion engine (14) is provided within the roof channel (16).

4. Body according to Claim 3, **characterized in that** the air inlet funnel (24) forms a structural unit with an air guide housing (25).

5. Body according to one or more of the preceding claims, **characterized in that** the inlet openings (22 and 23) of the tube bodies (20 and 21) are surrounded by a hood element (27).

6. Body according to Claim 5, **characterized in that** the hood element (27) over-arches the tube bodies (20 and 21) and runs with a hood wall (28) at a distance (As) to the tube bodies (20 and 21).

7. Body according to Claim 6, **characterized in that** the hood wall (28) protrudes beyond the tube bodies (20 and 21) as seen in the direction of travel (B).

8. Body according to Claims 6 and 7, **characterized in that**, seen in a longitudinal section, the hood wall (28) is formed in the manner of an aerodynamic wing.

## Revendications

1. Carrosserie pour une voiture particulière, selon laquelle il est prévu au moins un dispositif de guidage pour l'apport d'air de combustion à un moteur à combustion interne qui est de préférence disposé au voisinage d'un essieu arrière de la voiture particulière, sachant qu'un canal de toit (16) conçu comme dispositif de guidage (15) est prévu sur un toit (8) de forme aérodynamique de la carrosserie (2), canal qui suit au moins sectoriellement une ligne de toit (13) s'étendant dans la direction longitudinale (C-C) du véhicule et qui présente un dispositif d'admission (17) au voisinage d'un pare-brise (7) et est raccordé à un système d'aspiration (18) du moteur à combustion interne (14), le canal de toit (16) étant pour partie formé dans un renfoncement (19) du toit (8), **caractérisée en ce que** le canal de toit (16) comprend au moins deux corps tubulaires (20 et 21) qui sont pourvus d'ouvertures d'entrée (22 et 23) constituant le dispositif d'admission (17).

2. Carrosserie selon la revendication 1, **caractérisée en ce que** les corps tubulaires (20 et 21) sont réalisés de forme aérodynamique conjointement avec les ouvertures d'entrée (22 et 23).

3. Carrosserie selon une ou plusieurs des revendications précédentes, **caractérisée en ce qu'**une trompette d'admission d'air (24) du moteur à combustion interne (14) est prévue à l'intérieur du canal de toit (16).

4. Carrosserie selon la revendication 3, **caractérisée en ce que** la trompette d'admission d'air (24) forme une unité de construction avec un boîtier de guidage d'air (25).

5. Carrosserie selon une ou plusieurs des revendications précédentes, **caractérisée en ce que** les ouvertures d'entrée (22 et 23) des corps tubulaires (20 et 21) sont entourées par un élément formant capot (27).

6. Carrosserie selon la revendication 5, **caractérisée en ce que** l'élément formant capot (27) recouvre en voûte les corps tubulaires (20 et 21) et s'étend par une paroi de capot (28) à distance (As) des corps tubulaires (20 et 21).

7. Carrosserie selon la revendication 6, **caractérisée en ce que** la paroi de capot (28) dépasse des corps tubulaires (20 et 21), considéré dans la direction de marche (B).

8. Carrosserie selon les revendications 6 et 7, **caractérisée en ce que** la paroi de capot (28) est réalisée, considéré en coupe longitudinale, à la manière d'une aile aérodynamique.
